# EUROPÄISCHE PATENTSCHRIFT

(11) **EP 3 529 542 B1**
(45) Veröffentlichungstag und Bekanntmachung des Hinweises auf die Patenterteilung: **18.11.2020**
(21) Anmeldenummer: 17786913.8
(22) Anmeldetag: 19.10.2017
(51) Int. Cl.: F24T 10/00

(54) **VERFAHREN ZUR BERECHNUNG VON ERDSPEICHERTEMPERATUREN FÜR DEN BETRIEB EINER GEOTHERMISCHEN ANLAGE**
METHOD FOR CALCULATING GROUND STORAGE DEVICE TEMPERATURES FOR THE OPERATION OF A GEOTHERMAL FACILITY
PROCÉDÉ POUR CALCULER DES TEMPÉRATURES D'UN RÉSERVOIR SOUTERRAIN POUR LE FONCTIONNEMENT D'UNE INSTALLATION GÉOTHERMIQUE

(30) Priorität: 19.10.2016 DE 102016119926
(43) Veröffentlichungstag der Anmeldung: 28.08.2019
(73) Patentinhaber: Foxmark AG, 9052 Niederteufen (CH)
(72) Erfinder: MÉGEL, Thomas, 8005 Zürich (CH); BREMGARTNER, Remo, 9056 Gais (CH); GYALISTRAS, Dimitrios, 3006 Bern (CH)
(74) Vertreter: Hansen, Jochen
(86) Internationale Anmeldenummer: PCT/EP2017/076693
(87) Internationale Veröffentlichungsnummer: WO 2018/073337

(56) Entgegenhaltungen:
- US-A1- 2007 061 104
- FUJIMITSU Y ET AL: "Evaluation of subsurface thermal environmental change caused by a ground-coupled heat pump system", CURRENT APPLIED PHYSICS, NORTH-HOLLAND, AMSTERDAM, NL, Bd. 10, Nr. 2, 1. März 2010 (2010-03-01), Seiten S113-S116, XP026984043, ISSN: 1567-1739 [gefunden am 2009-11-11]
- ZHOU ZHIHUA ET AL: "Temperature change of underground in the long running of vertical ground-coupled heat pump", ELECTRIC TECHNOLOGY AND CIVIL ENGINEERING (ICETCE), 2011 INTERNATIONAL CONFERENCE ON, IEEE, 22. April 2011 (2011-04-22), Seiten 1643-1646, XP031872745, DOI: 10.1109/ICETCE.2011.5775915 ISBN: 978-1-4577-0289-1
- HWANG S ET AL: "Evaluation of estimation method of ground properties for the ground source heat pump system", RENEWABLE ENERGY, PERGAMON PRESS, OXFORD, GB, Bd. 35, Nr. 9, 1. September 2010 (2010-09-01), Seiten 2123-2130, XP027015031, ISSN: 0960-1481 [gefunden am 2010-02-26]
- OZGENER ONDER ET AL: "A practical approach to predict soil temperature variations for geothermal (ground) heat exchangers applications", INTERNATIONAL JOURNAL OF HEAT AND MASS TRANSFER, PERGAMON PRESS, GB, Bd. 62, 9. April 2013 (2013-04-09), Seiten 473-480, XP028590904, ISSN: 0017-9310, DOI: 10.1016/J.IJHEATMASSTRANSFER.2013.03.031
- GARCIA-VALLADARES O ET AL: "Numerical modeling of flow processes inside geothermal wells: An approach for predicting production characteristics with uncertainties", ENERGY CONVERSION AND MANAGEMENT, ELSEVIER SCIENCE PUBLISHERS, OXFORD, GB, Bd. 47, Nr. 11-12, 1. Juli 2006 (2006-07-01), Seiten 1621-1643, XP027957270, ISSN: 0196-8904 [gefunden am 2006-07-01]

## Beschreibung

Die Erfindung betrifft ein Verfahren zur Berechnung von Erdspeichertemperaturen für den Betrieb einer geothermischen Anlage mit einem Zirkulationssystem über wenigstens eine Erdwärmesonde oder einen Energiepfahl mit zur Erdwärmesonde oder Energiepfahl führenden Eintritts- und Austrittsleitungen, wobei die Untergrundtemperatur im Erdspeicher und/oder die Temperaturen an den Eintritts- und Austrittsleitungen gemessen werden.

Bei Erdwärmesonden- oder Energiepfahl-Anlagen, die der Gebäudeheizung und/oder Gebäudeklimatisierung dienen, ist es bekannt, die Temperatur am Zirkulationssystem, insbesondere an den Eintritts- und Austrittsleitungen zu messen. Alternativ oder ergänzend können Geothermiesysteme auch einen Temperatursensor in oder an der Erdwärmesonde/Energiepfahl im Untergrund aufweisen, so dass die Untergrundtemperatur im Bereich des Erdspeichers überwacht wird. Damit können die aktuellen Messwerte der direkt oder indirekt gemessenen Erdspeichertemperatur zur Steuerung und Regelung der geothermischen Anlage verwendet werden. Alternativ kann auch der Energiefluss gemessen und daraus die geothermische Anlage gesteuert werden. Nachteilig ist, dass ein energetisches Energiemanagement des Erdspeichers nicht stattfindet. Zur Definition wird klargestellt, dass bei den geothermischen Anlagen stets sowohl Anlagen mit Erdwärmesonden, wie auch Anlagen mit Energiepfählen gemeint sind. Auch wenn im nachfolgenden Text teils nur Erdwärmesonden genannt sind, soll dieses Begriff-Synonym auch die Alternative mit einem Energiepfahl-System umfassen.

Eine Wärmespeicher- und -rekuperatoranordnung ist aus der DE 26 51 684 A1 bekannt, bei der Wärme in einer Gesteinsmatrix als eingeschlossene Schicht gespeichert und abgerufen wird. Dazu wird über diese Gesteinsmatrix in einem Primärkreislauf Wasser zirkuliert, das von einem Wärmetauscher über einen Sekundärkreislauf erwärmt oder gekühlt wird. Somit wird in dieser Gesteinsmatrix Wärme von einem Verteilernetz zwischengespeichert und bei Bedarf wieder abgerufen. Die Anordnung weist auch Messgeräte zum Vorwärts- und Rückwärtszählen des zirkulierten Wasservolumens, Druckfühler und Temperaturfühler sowie ein Durchfluss-Stellglied auf, womit die Bereitstellung oder die Anforderung von Wärme über den Aufheiz- und Nutz-Sekundärkreis gesteuert wird.

Aus der DE 29 16 530 A1 ist ein Verfahren und eine Einrichtung zur Erzeugung und Verteilung thermischer Energie mit Kompensationsverlagerung in geothermische Schichten bekannt. Darin wird mit einem thermischen Austauschkreislauf mit Wärmeverteilungs- und -rückgewinnungskreisläufen und einer geothermischen Schicht derart zusammengearbeitet, dass im Verlaufe eines Jahreszyklus der Wärmeverteilerkreislauf der geothermischen Schicht eine Wärmemenge entnimmt, die eine Verringerung der Schichttemperatur verursacht und im weiteren Jahreszyklus etwa die gleiche Wärmemenge dieser Schicht wieder über einen Wärmerückgewinnungskreislauf zuführt. Eine Langzeitprognose der zu erwartenden Erdspeichertemperaturen kann mit diesem Verfahren ebenfalls nicht gegeben werden. Vielmehr wird durch den Wärmerückgewinnungskreislauf durch eine aktive Steuerung eine erforderliche Wärmemenge der geothermischen Schicht zugeführt.

Darüber hinaus sind zur geothermischen Nutzung des Temperaturenniveaus im Untergrund sogenannte Erdwärmesonden als geschlossene Zirkulationssysteme bekannt. Teils werden derartige geschlossene Systeme auch in sogenannten Energiepfählen zur Erdwärmenutzung integriert. Beispielhaft wird auf die DE 10 2012 013 337 A1 verwiesen.

Auch bei geschlossenen Zirkulationssystemen über Erdwärmesonden bestehen Risiken beim Energiemanagement. Weicht die energetische Nutzung des Erdspeichers signifikant von den Planungswerten ab und/oder stellen sich Annahmen über die thermischen Eigenschaften des Untergrundes als fehlerhaft heraus, kann dies im weiteren Betrieb der geothermischen Anlage zu einer Abschaltung der Wärme- oder Kälteversorgung führen. Dies geschieht tendenziell während Zeiten mit dem größten Wärme- bzw. Kältebedarf, da dann die geothermische Anlage am stärksten belastet ist. Meist ist diese in der Planung nicht vorhergesehene oder nicht voraussehbare Temperaturentwicklung ein Vorgang, der erst nach mehreren Jahren die Grenzwerte des wirtschaftlich sinnvollen Betriebs der geothermischen Anlage überschreitet und dann zu Betriebsstörungen führt. Als Folge müssen unter Zeitdruck Notlösungen oder Anlagenanpassungen vorgenommen werden, die oft nicht mehr in die Garantiefrist des Anlagenbauers fallen.

Bei der Planung von Geothermiesystemen werden bisher Energiebilanzen und Verbrauchsszenarien verwendet, die zum Teil auf sehr unsicheren Annahmen zur Betriebsführung, zur verwendeten Regelung, zum Lokalklima, zur Gebäudenutzung, zur Beeinflussung durch benachbarte Geothermieanlagen etc. basieren. Daher ist es wahrscheinlich, dass die effektive Nutzung des Erdspeichers und damit seine Temperaturentwicklung im Laufe des Gebäudebetriebes von der Planungsannahme erheblich abweicht.

In der FUJIMITSU Y ET AL: "Evaluation of subsurface thermal environmental change caused by a ground-coupled heat pump system", CURRENT APPLIED PHYSICS, NORTH-HOLLAND, AMSTERDAM, NL, Bd. 10, Nr. 2, 1. März 2010 (2010-03-01), Seiten S113-S116, XP026984043, ISSN: 1567-1739 wurden Untergrundtemperaturen und Grundwasserspiegel in einigen Beobachtungsbohrungen um eine Wärmesondenbohrung einer geothermischen Anlage ausgewertet. Daraus wurde mittels numerischer Simulation die Änderung der Untergrundtemperatur über einen Betriebszeitraum von 20 Jahren hergeleitet.

In der Veröffentlichung ZHOU ZHIHUA ET AL: "Temperature change of underground in the long running of vertical ground-coupled heat pump", ELECTRIC TECHNOLOGY AND CIVIL ENGINEERING (ICETCE), 2011 INTERNATIONAL CONFERENCE ON, IEEE, 22. April 2011 (2011-04-22), Seiten 1643-1646, XP031872745, DOI: 10.1109/ICETCE.2011.5775915 ISBN: 978-1-4577-0289-1 wird die Temperaturänderung im Untergrund beim lang andauernden Betrieb von geothermischen Anlagen mit einem Zirkulationssystem mittels Erdwärmesonde untersucht. Dabei wird ein Erdspeichermodel verwendet, das die reinen Wärmeleitungsprozesse entlang der Erdwärmesonde (geothermische Bohrung) auch nach dem Eskilson's-Model berücksichtigt.

Aufgabe der Erfindung ist es ausgehend von diesen Untersuchungen, eine Langzeitprognose von zu erwartenden Erdspeichertemperaturen für die zu betrachtende geothermische Anlage erstellen zu können, die auf der tatsächlichen Nutzung des Erdspeichers beruht.

Gelöst wird diese Aufgabe durch Verfahren gemäß Anspruch 1. Durch während des Betriebs der geothermischen Anlage kontinuierlich oder in entsprechend geeigneter Abtastrate durchgeführter Messungen der Temperaturen des Erdspeichers und/oder der Soletemperaturen (Temperatur des Zirkulationsmediums (Sole)) können über ein erstelltes Erdspeichermodell dynamische Energieflüsse im Erdspeicher berechnet werden. Dann wird aus diesen über einen längeren Betriebszeitraum bestimmten, dynamischen Energieflüssen im Erdspeicher ein Energieflussmodell in Abhängigkeiten von Parametern und Eingangsgrößen, wie beispielsweise der Jahreszeit, dem Wochentag, der Tageszeit, der Betriebsführung der Anlage, Anlagennutzungs-, Klima-, und/oder Wetterdaten, sowie der Beanspruchung des Erdspeichers durch Nachbaranlagen erstellt. Aus den angenommenen Werten zu den künftigen Eingangsgrößen und Parametern und dem Energieflussmodell können die zu erwartenden dynamischen Energieflüsse im Erdspeicher bestimmt werden. Mit diesen zu erwartenden dynamischen Energieflüssen und dem Erdspeichermodell können dann die zukünftigen Temperaturverläufe im Erdspeicher berechnet werden. Dabei erfolgt die Berechnung der dynamischen Energieflüsse im Erdspeicher aus den gemessenen Temperaturverläufen durch ein schrittweises Vorgehen, wobei in einem bestimmten Zeitschritt die momentane Änderung der gemessenen Temperatur bestimmt und diese durch den Temperatureffekt aller Energieflussänderungen in den vorangegangenen Zeitschritten korrigiert wird, womit am Ende des aktuellen Zeitschritts nur noch eine Temperaturänderung übrig bleibt, die allein ein Effekt der Energieflussänderung am Anfang des aktuellen Zeitschritts ist, womit die Energieflussänderung des aktuellen Zeitschritts berechnet und zum nächsten Zeitschritt gegangen wird, womit sich eine Zeitreihe der Energieflüsse im Erdspeicher ergibt, die auf den gemessenen Temperaturverläufen basiert.

Während des Betriebes der geothermischen Anlage können somit laufende Langzeitprognosen anhand der bisher gemessenen Erdspeicher- und/oder Soletemperaturen aus dem Erdwärmesondenfeld zur Verfügung gestellt werden. Mit dieser Auswertung der Temperaturmesswerte können aufkommende Risiken, die den wirtschaftlichen Betrieb der geothermischen Anlage gefährden, frühzeitig erkannt und Maßnahmen zur Betriebssicherung vorausschauend getroffen werden. Beispielsweise kann ein aktives Energiemanagement des Erdspeichers ein zu starkes Auskühlen des Erdspeichers verzögern oder gar verhindern. Somit kann das Prognoseverfahren zur Investitionssicherung durch rechtzeitige Anlagen-, Betriebs- oder Regelungsanpassung oder für probabilistische Aussagen zu Versicherungslösungen dienen. Darüber hinaus kann das Verfahren zur Sicherstellung einer nachhaltigen thermischen Nutzung des Untergrunds in einem kommunalen oder gar umfassenderen Maßstab eingesetzt werden.

Insoweit die Erwartungswerte oder weitere statistische Kennzahlen (wie zum Beispiel die Varianzen, die Autokovarianzen oder die Schiefe) der dynamischen Energieflüsse im Erdspeicher eine robuste Abhängigkeit von der Jahreszeit, dem Wochentag, der Tageszeit oder anderen deterministischen Größen aufweisen, wird durch den Einbezug entsprechender Zyklen, Muster und Zufallsprozesse im Energieflussmodell sichergestellt, dass die Energieflüsse und die daraus folgenden Temperaturverläufe im Erdspeicher realitätsnah simuliert werden.

Dadurch, dass zur Erstellung und Parametrierung des Energieflussmodells mögliche Abhängigkeiten der Energieflüsse im Erdspeicher von der zukünftigen Betriebsführung und Nutzung der Anlage, der Außenlufttemperatur und weiteren Kleinklima- und/oder Wetterdaten, sowie von einer möglichen Beanspruchung des Erdspeichers durch Nachbaranlagen berücksichtigt werden, fließen neben der Betriebsführung und Anlagennutzung auch äußere Beeinflussungen durch das Kleinklima, insbesondere die herrschende Außenlufttemperatur, sowie die thermische Nutzung des Untergrundes durch benachbarte Anlagen in die simulierten Energieflüsse und die daraus folgenden Temperaturverläufe im Erdspeicher ein.

Wenn die berechneten zukünftigen Temperaturverläufe im Erdspeicher hinsichtlich Zeiträumen ausgewertet werden, bei denen die simulierte Erdspeichertemperatur einen unteren Grenzwert unterschreitet oder einen oberen Grenzwert überschreitet, können kritische Betriebszustände der geothermischen Anlage zu bestimmten Zeiträumen erkannt und deren Dauer und Häufigkeit quantifiziert werden.

Für eine übliche geothermische Anlage zur Gebäudeheizung mit Erdwärmesonden und nachgeschalteter Wärmepumpe, sollte der untere Grenzwert für die Erdspeichertemperatur 0,0°C bis 4,0°C, insbesondere 1,5°C betragen.

Für eine übliche Gebäudeklimatisierung sollte die simulierte Erdspeichertemperatur den oberen Grenzwert nicht übersteigen, Der obere Grenzwert sollte bei Direktkühlung 11,0°C bis 16,0°C, insbesondere 14°C betragen.

Dadurch, dass bei Zunahme der Zeiträume mit Überschreiten des oberen Grenzwertes ein Alarmsignal abgegeben und eine stärkere Abkühlung des Erdspeichers bei zukünftigen Betriebssituationen versucht wird, wird die kritische Prognose der immer häufiger auftretenden Überschreitung des oberen Grenzwertes zunächst als Alarm den Nutzern bzw. dem Überwachungspersonal der geothermischen Anlage mitgeteilt und bei zukünftigen Betriebssituationen, die eine Abkühlung des Erdspeichers bewirken, insbesondere beim Abfordern von Heizenergie zur Gebäudebeheizung, durch geeignete Steuerung versucht, den Erdspeicher stärker abzukühlen. Dies wird beispielsweise dadurch erreicht, dass zusätzliche Wärmeabnahmestellen angesteuert und/oder generiert werden. Umgekehrt werden bei Zunahme der Zeiträume mit Unterschreiten des unteren Grenzwertes ein Alarmsignal abgegeben und eine stärkere Erwärmung des Erdspeichers bei zukünftigen Betriebssituationen versucht. Dabei wird beispielsweise versucht in Zeiten der Gebäudekühlung diese Kühlung intensiver durchzuführen, so dass eine stärkere Erwärmung des Erdspeichers daraus folgt. Nach den entsprechenden Anpassungen im Betrieb und der Regelung der geothermischen Anlage kann dann bei weiter fortschreitender Betriebssituation wiederum mit den errechneten Prognosen kontrolliert werden, ob die Anpassungen ausreichen, um den Erdspeicher und das gesamte System wieder "einzufangen", d. h. dass die Zeiträume mit Überschreiten des oberen bzw. unteren Grenzwertes nicht weiter zunehmen.

Nachfolgend werden zwei Ausführungsbeispiele eines Verfahrens zur Berechnung von Erdspeichertemperaturen anhand der beiliegenden Zeichnungen detailliert beschrieben.

Darin zeigt:
- Fig. 1: ein schematisches Ablaufschema des Verfahrens in zwei Alternativen,
- Fig. 2: Messwerte der Soletemperatur über einen Zeitraum von über drei Monaten,
- Fig. 3: Berechnung des Energieflusses aus der gemessenen Soletemperatur gemäß Fig. 2 unter Zugrundelegung eines Erdspeichermodells,
- Fig. 4: die Parametrierung des Energieflusses mit der Außenlufttemperatur,
- Fig. 5: Erstellung eines Energieflussmodells in Abhängigkeit der jahreszeitlich schwankenden Außenlufttemperaturen und zu erwartende dynamische Energieflüsse im Erdspeicher,
- Fig. 6: Berechnung des zukünftigen Temperaturverlaufs im Erdspeicher unter Zugrundelegung der zu erwartenden dynamischen Energieflüsse im Erdspeicher und des Energiespeichermodells und
- Fig. 7: berechnete zukünftige Temperaturverläufe unter Zugrundelegung drei verschiedener Außentemperaturszenarien.

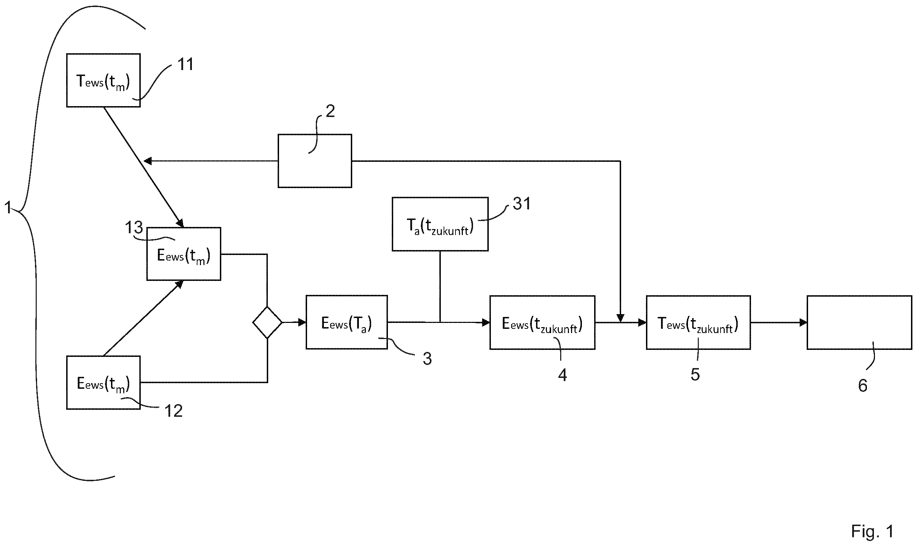

In Fig. 1 ist ein schematisches Ablaufschema des Vorhersageverfahrens dargestellt. In einer Messwerterfassung 1 werden Messwerte über eine Zeitperiode tₘ (Bezugszeichen 11 bzw. 12) erfasst.

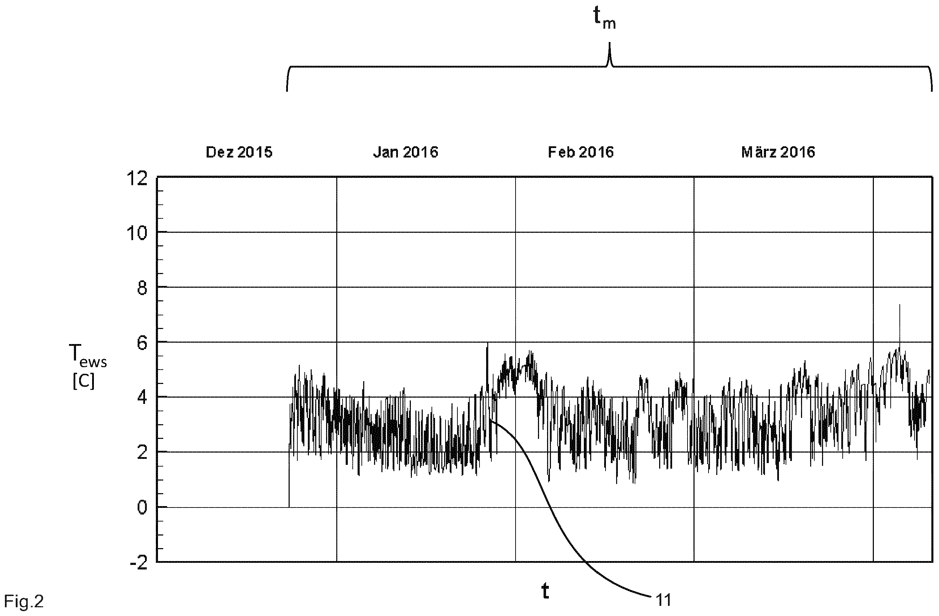

In der bevorzugten Ausführungsform erfolgt eine Temperaturmessung 11 an der Erdwärmesonde oder (hier nicht dargestellt) an den Eintritts-/Austrittsleitungen für das Zirkulationsmedium für die Erdwärmesonde. Bei der Temperaturmessung 11 wird somit T_{ews}(tₘ) (Fig. 2) erfasst. Die Temperaturmessung 11 kann dabei von einem im Bohrloch mit eingesetzten Temperatursensor, einem Temperatursensor in den Erdwärmesonden, beispielsweise auch als Messmolch, oder durch eine Temperaturmessung an den Eintritts-/und Austrittsleitungen des Erdspeichers erfolgen.

Es wird dann ein mathematisches Modell des Erdspeichers erstellt und parametriert. Bevorzugt berücksichtigt das Erdspeichermodel die reinen Wärmeleitungsprozesse, die entlang einer Linienquelle, nämlich entlang in der Bohrung aufgenommen Erdwärmesonde oder Energiepfahl mathematisch aus dem bekannten Zusammenhang zwischen einer momentanen Energieänderung und der daraus folgenden zeitlichen Temperaturänderung auftreten. Dieser Zusammenhang kann beispielsweise mit der aus der Literatur - Eskilson P., 1987; "Thermal analysis of heat extraction boreholes"; Dissertation; Department of Mathematical Physics; Lund University of Technology, Lund, Sweden - bekannten g-Funktion (dort auf Seite 10 Formel 5.6) nachgebildet werden. Da die Wärmeleitung durch eine lineare Differentialgleichung beschrieben wird, kann bei einer Abfolge von beliebig vielen Energieänderungen die daraus resultierende Temperaturänderung zu einem bestimmten Zeitpunkt durch Superposition der Einzellösungen der Funktion berechnet werden.

Diese Anwendung wird in der Planung von Erdsonden- oder Energiepfahlanlagen heute regelmäßig eingesetzt. Das vorliegende Verfahren benutzt neu dieses mathematische Vorgehen im Erdspeichermodell sowohl für die oben erwähnte Berechnung der Temperaturänderungen aus den Energieflüssen im Erdspeicher, als auch in der anderen Richtung, nämlich für die Berechnung der Energieflüsse im Erdspeicher aus den Temperaturänderungen (vgl. Fig 1, Erdspeichermodell 2).

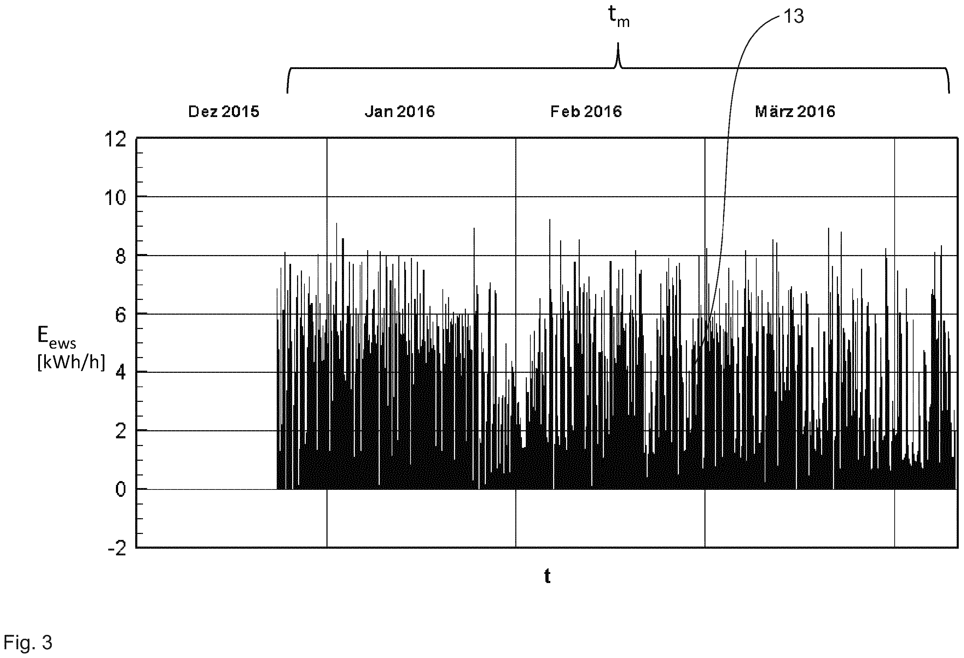

Die Berechnung der dynamischen Energieflüsse im Erdspeicher aus den gemessenen Temperaturverläufen erfolgt durch ein schrittweises Vorgehen. Dabei wird in einem bestimmten Zeitschritt die momentane Änderung der gemessenen Temperatur bestimmt und diese durch den Temperatureffekt aller Energieflussänderungen in den vorangegangenen Zeitschritten korrigiert. Damit bleibt am Ende des aktuellen Zeitschritts nur noch eine Temperaturänderung übrig, die allein ein Effekt der Energieflussänderung am Anfang des aktuellen Zeitschritts ist. Damit kann die Energieflussänderung des aktuellen Zeitschritts berechnet werden und es wird zum nächsten Zeitschritt gegangen. Sind die gemessenen Temperaturen in der zirkulierenden Sole gemessen, so wird im letzten Rechenschritt die verbleibende Temperaturänderung noch um den Wärmeübergang zwischen Bohrlochwand und Sole korrigiert. Damit ergibt sich eine lückenlose Zeitreihe der Energieflüsse im Erdspeicher, die auf den gemessenen Temperaturverläufen basiert. Somit wird dieses Erdspeichermodell 2 zur Berechnung des Energieflusses E_{ews}(tₘ) (Fig. 3, in Fig. 1, Energiefluss abgeleitet 13) über die Erdwärmesonde aus den gemessenen Temperaturen der Temperaturmessung 11 verwendet. Die Berechnung der zukünftigen Temperaturverläufe 5 im Erdspeicher mit dem Energieflussmodell 3 erfolgt dann wieder mit dem im ersten Abschnitt beschriebenen, bekannten Vorgehen.

Alternativ zur Ausgestaltung mit einer Temperaturmessung 11 kann die Messwerterfassung 1 auch durch Energieflussmessung 12 direkt an der Eintritts-/und Austrittsleitung zur Erdwärmesonde ausgebildet werden. Mit der Energieflussmessung 12 wird somit E_{ews}(tₘ) direkt gemessen. Ein Energieflussmesser ist jedoch erheblich aufwendiger als Temperatursensoren, so dass für viele Anwendungen die erste Ausführungsform mit Temperatursensoren wirtschaftlicher sein dürfte. Eine allfällige Energieflussdifferenz zwischen Energieflussmessung 12 und dem Energiefluss 13, der aus der Temperaturmessung 11 abgeleitet wird, weist auf im Erdspeichermodell nicht berücksichtigte Prozesse hin. Beispielsweise Grundwasserströme, Beeinflussungen von benachbarten Anlagen etc..

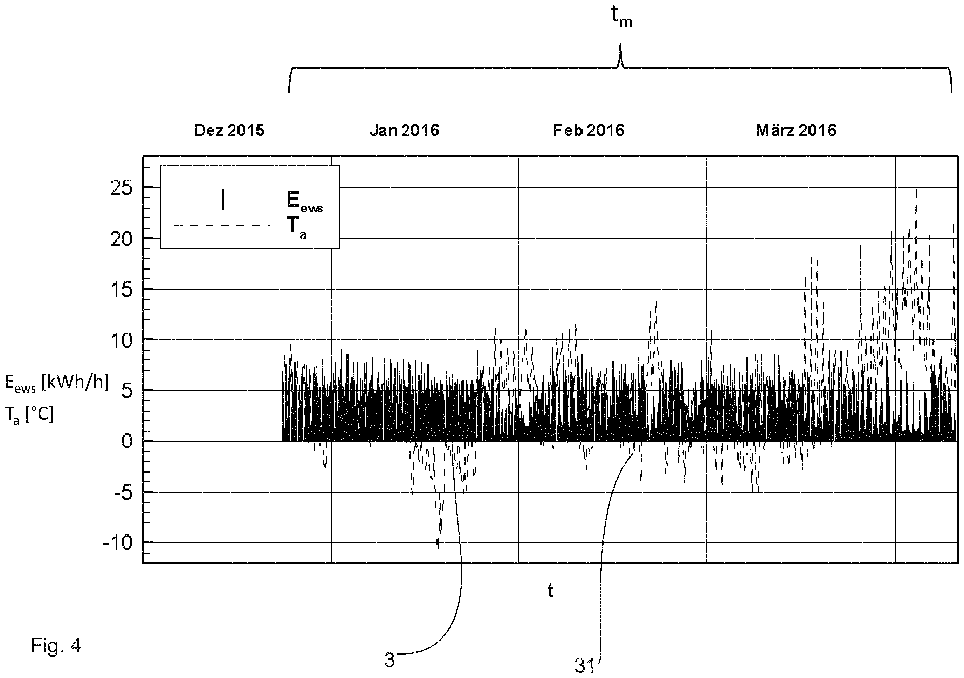

Der aus der Temperaturmessung berechnete Energiefluss über den betrachteten Zeitintervall tₘ bzw. der gemessene Energiefluss aus Energieflussmessung 12 wird anschließend mit der Außenlufttemperatur Tₐ über die Messperiode tₘ parametriert, wie dies im Graphen in Fig. 4 dargestellt ist.

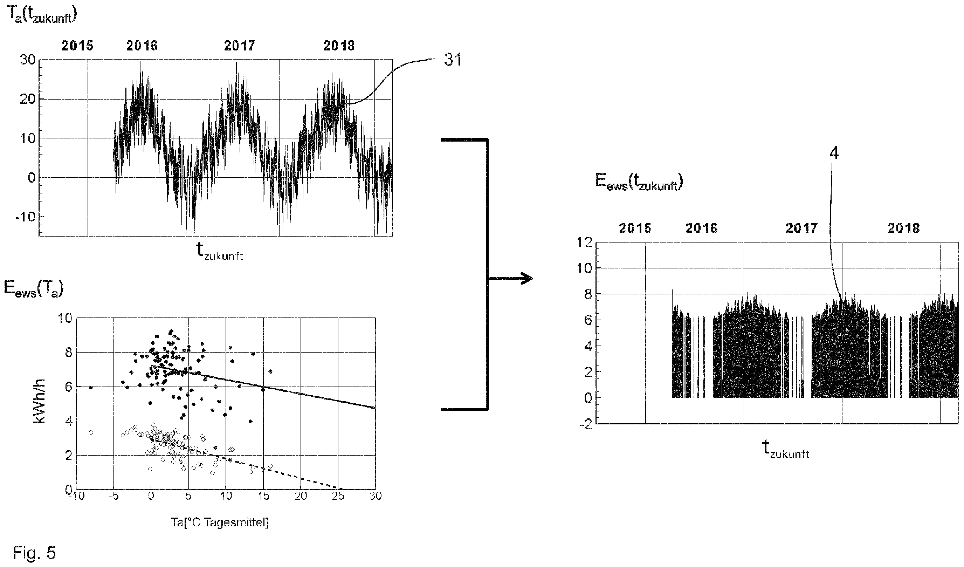

Bei der Parametrierung wird beispielsweise bezogen auf die Tagesmittelwerte (offene Kreise in Fig. 5) oder Tagesmaximalwerte (schwarze Kreise in Fig. 5) der Außentemperatur Tₐ ein Energieflussmodell E_{ews}(Tₐ) abgeleitet, das dann für künftige Szenarien bestimmende Parameter wie beispielsweise die künftige Außenlufttemperatur Tₐ (in Fig. 1 mit Bezugszeichen 31 bezeichnet) verwendet wird. Aus dem Energieflussmodell mit der zukünftigen Außenlufttemperatur können dann Energieflussszenarien 4, also künftige Energieflusswerte E_{ews}(t_{zukunft}) für das Erdwärmesondenfeld berechnet werden.

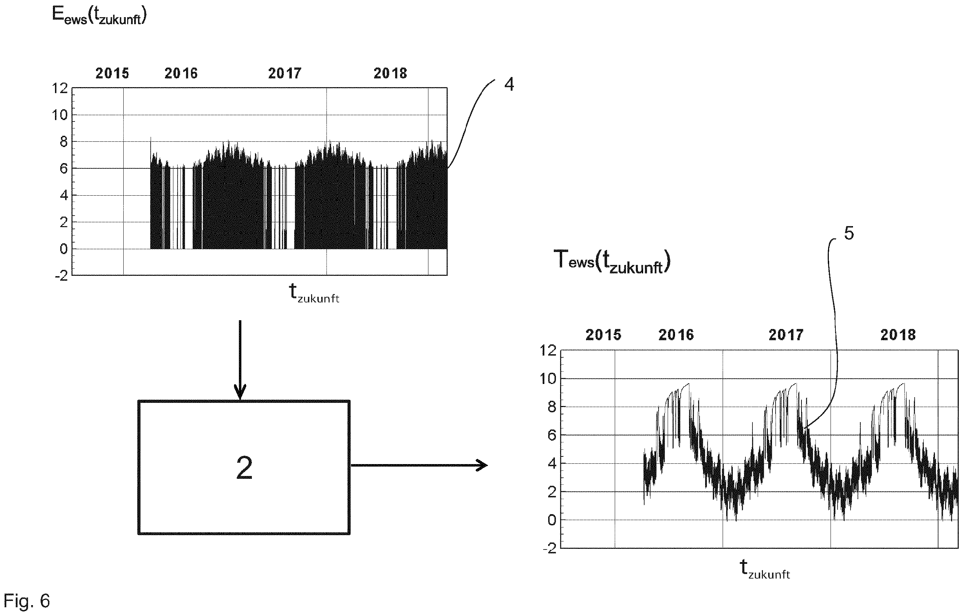

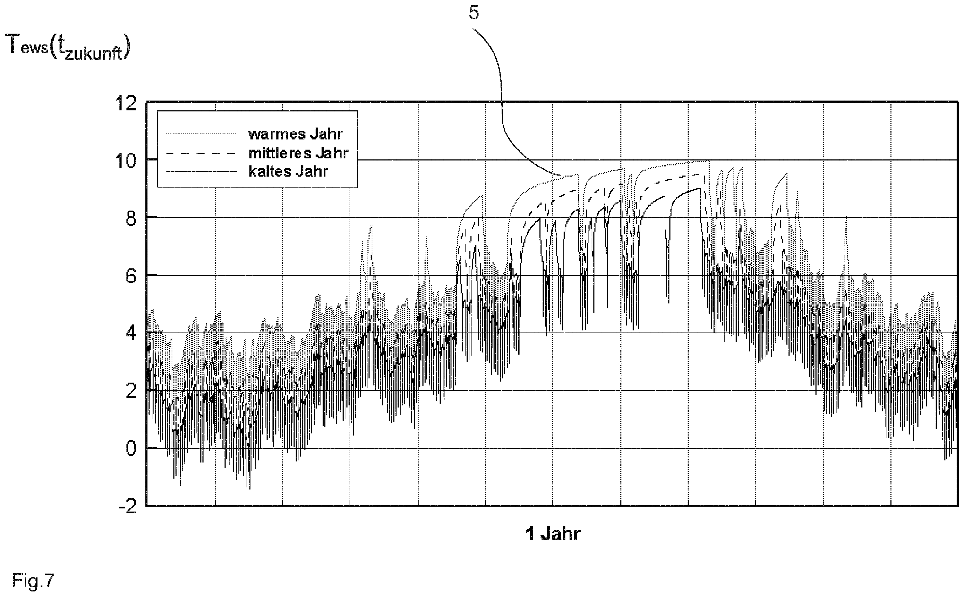

Im weiteren Schritt, der in Fig. 6 mit entsprechenden Graphen dargestellt ist, werden nun die Temperaturverläufe im Erdspeicher anhand der Energieflussszenarien 4 und dem Erdspeichermodell 2 berechnet, so dass als Ergebnis eine Temperaturvorhersage 5, nämlich künftige Temperatur in Abhängigkeit der Zeit T_{ews}(t_{zukunft}) berechnet werden. Beispielhaft ist in Fig. 7 eine solche Darstellung für das 25ste Jahr, nämlich in drei verschiedenen Varianten für warme, normale und kalte Jahre dargestellt. Auf der x-Achse ist die Zeit, nämlich das 25ste Jahr aufgeführt, wohingegen auf der y-Achse die prognostizierte Temperatur des Erdspeichers dargestellt ist.

Die so ermittelten zukünftigen Temperaturverläufe 5 können dann einer weiteren Auswertung 6 mit etwaiger Alarmierung und Steuerung der Erdwärmeanlage zugeführt werden. Dabei können Grenzwerte festgelegt und überwacht werden. Bei Überschreitung von Grenzwerten kann dann eine Alarmierung und ggf. auch eine Gegensteuerung der Anlage erfolgen.

### Bezugszeichenliste

- 1: Messwerterfassung
- 11: Temperaturmessung
- 12: Energieflussmessung
- 13: Energiefluss, abgeleitet

- 2: Erdspeichermodell

- 3: Energieflussmodell
- 31: zukünftiger Außenlufttemperaturverlauf

- 4: zukünftiger Energiefluss

- 5: zukünftiger Temperaturverlauf; Temperaturvorhersage im Erdspeicher

- 6: Auswertung und Steuerung

## Patentansprüche

1. Verfahren zur Berechnung von Erdspeichertemperaturen während des Betriebs einer geothermischen Anlage mit einem Zirkulationssystem über wenigstens eine Erdwärmesonde oder einen Energiepfahl mit zur Erdwärmesonde oder Energiepfahl führenden Eintritts- und Austrittsleitungen, wobei die Untergrundtemperatur im Erdspeicher und/oder die Temperaturen an den Eintritts- und Austrittsleitungen gemessen werden, mit den Schritten:
- Erstellung eines Erdspeichermodells (2) zur Umrechnung der gemessenen Temperaturverläufe zu dynamischen Energieflüssen im Erdspeicher;
- Erstellung eines Energieflussmodells (3) beruhend auf statistisch ermittelten Mustern und von wärme- und kältetechnisch relevanten Einflussgrößen;
und
- Berechnung der zukünftigen Temperaturverläufe (5) im Erdspeicher mit dem Energieflussmodell (3) und dem Erdspeichermodell (2),
**dadurch gekennzeichnet, dass** die Berechnung der dynamischen Energieflüsse im Erdspeicher aus den gemessenen Temperaturverläufen durch ein schrittweises Vorgehen erfolgt, wobei in einem bestimmten Zeitschritt die momentane Änderung der gemessenen Temperatur bestimmt und diese durch den Temperatureffekt aller Energieflussänderungen in den vorangegangenen Zeitschritten korrigiert wird, womit am Ende des aktuellen Zeitschritts nur noch eine Temperaturänderung übrig bleibt, die allein ein Effekt der Energieflussänderung am Anfang des aktuellen Zeitschritts ist, womit die Energieflussänderung des aktuellen Zeitschritts berechnet und zum nächsten Zeitschritt gegangen wird, womit sich eine Zeitreihe der Energieflüsse im Erdspeicher ergibt, die auf den gemessenen Temperaturverläufen basiert, wobei zur Erstellung und Parametrierung des Energieflussmodells (3) wiederkehrende Muster, nämlich jährliche, wöchentliche und tägliche Zyklen der Energieflüsse im Erdspeicher berücksichtigt werden und mit dem Energieflussmodell (3) und künftig zu erwartenden Eingangsgrößen und Parameterwerten für Betriebsführung und Nutzung der Anlage, der Außenlufttemperatur und weiteren Kleinklima- und/oder Wetterdaten sowie einer möglichen Beanspruchung des Erdspeichers durch Nachbaranlagen die künftig zu erwartenden Energieflüsse simuliert werden.

2. Verfahren nach Anspruch 1, **dadurch gekennzeichnet, dass** bei der Korrektur der momentanen Änderung der gemessenen Temperatur die verbleibende Temperaturänderung um den Wärmeübergang zwischen Bohrlochwand und im Zirkulationssystem zirkulierender Sole korrigiert wird, wenn die gemessenen Temperaturen in der zirkulierenden Sole gemessen werden.

3. Verfahren nach einem der vorangehenden Ansprüche, **dadurch gekennzeichnet, dass** die berechneten, zukünftigen Temperaturverläufe (31, 5) im Erdspeicher hinsichtlich Zeiträumen ausgewertet werden, bei denen die simulierte Erdspeichertemperatur einen unteren Grenzwert unterschreitet oder einen oberen Grenzwert überschreitet.

4. Verfahren nach Anspruch 3, **dadurch gekennzeichnet, dass** der untere Grenzwert für die Erdspeichertemperatur 0,0°C bis 4,0°C, insbesondere 1,5°C beträgt.

5. Verfahren nach Anspruch 3 oder 4, **dadurch gekennzeichnet, dass** der obere Grenzwert bei Direktkühlung 11,0°C bis 16,0°C, insbesondere 14°C beträgt.

6. Verfahren nach Anspruch 3, 4 oder 5, **dadurch gekennzeichnet, dass** bei Zunahme der Zeiträume mit Überschreiten des oberen Grenzwertes ein Alarmsignal abgegeben und eine stärkere Abkühlung des Erdspeichers bei zukünftigen Betriebssituationen versucht wird.

7. Verfahren nach Anspruch 3, 4 oder 5, **dadurch gekennzeichnet, dass** bei Zunahme der Zeiträume mit Unterschreiten des unteren Grenzwertes ein Alarmsignal abgegeben und eine stärkere Erwärmung des Erdspeichers bei zukünftigen Betriebssituationen versucht wird.

## Claims

1. A method of calculating underground storage temperatures during the operation of a geothermal plant with a circulation system via at least one geothermal probe or an energy pile with inlet and outlet lines leading to the geothermal probe or energy pile, wherein the underground temperature in the underground storage and/or the temperatures at the inlet and outlet lines are measured, having the steps:
- creation of an underground storage model (2) for conversion of the measured temperature profiles to dynamic energy flows in the underground storage;
- creation of an energy flow model (3) based on statistically determined patterns and on influencing variables relevant from a thermic and cooling point of view;
and
- calculation of the future temperature profiles (5) in the underground storage using the energy flow model (3) and the underground storage model (2).
**characterised in that** the calculation of the dynamic energy flows in the underground storage from the measured temperature profiles takes place by a step-by-step procedure, wherein the current change in the measured temperature is determined in a specific time step and this is corrected by the temperature effect of all energy flow changes in the preceding time steps, whereby at the end of the present time step there remains only a temperature change which is solely an effect of the energy flow change at the start of the present time step, whereby the energy flow change of the present time step is calculated and there is advancement to the next time step, whereby there arises a time series, based on the measured temperature profiles, of the energy flows in the underground storage, wherein recurring patterns, namely annual, weekly and daily cycles of the energy flows in the underground storage, are taken into account for creation and parameterization of the energy flow model (3) and the energy flows to be expected in the future are simulated using the energy flow model (3) and expected future input quantities and parameter values for operative management and utilization of the plant, the outside air temperature and further microclimate data and/or weather data as well as a possible stressing of the underground storage by neighbouring plants.

2. A method according to claim 1, **characterised in that** upon correction of the current change in the measured temperature, the remaining temperature change is corrected for the heat transfer between borehole wall and brine circulating in the circulation system when the measured temperatures in the circulating brine are measured.

3. A method according to any one of the preceding claims, **characterised in that** the calculated, future temperature profiles (31, 5) in the underground storage are evaluated with regard to time periods in which the simulated underground storage temperature falls below a lower threshold value or exceeds an upper threshold value.

4. A method according to claim 3, **characterised in that** the lower threshold value for the underground storage temperature is 0.0°C to 4.0°C, in particular 1.5°C.

5. A method according to claim 3 or 4, **characterised in that** the upper threshold value upon direct cooling is 11.0°C to 16.0°C, in particular 14°C.

6. A method according to claim 3, 4 or 5, **characterised in that** in the event of an increase in the periods of time when the upper threshold is exceeded there is emitted an alarm signal and greater cooling of the underground storage is attempted in future operating situations.

7. A method according to claim 3, 4 or 5, **characterised in that** in the event of an increase in the periods of time when there is a fall below the lower threshold there is emitted an alarm signal and greater heating of the underground storage is attempted in future operating situations.

## Revendications

1. Procédé de calcul des températures d'accumulateur géothermique pendant le fonctionnement d'une installation géothermique avec un système de circulation par l'intermédiaire d'au moins une sonde géothermique ou un pieu énergétique avec des conduites d'entrée et de sortie menant à la sonde géothermique ou au pieu énergétique, la température souterraine dans l'accumulateur géothermique et/ou les températures dans les conduites d'entrée et de sortie étant mesurées, procédé comprenant les étapes consistant à :
- créer un modèle d'accumulateur géothermique (2) pour convertir les courbes de température mesurées en des flux d'énergie dynamiques dans l'accumulateur géothermique ;
- créer un modèle de flux d'énergie (3) basé sur des modèles déterminés statistiquement et sur des variables d'influence pertinentes du point de vue du chauffage et du refroidissement ;
et
- calculer les courbes de température (5) à venir dans l'accumulateur géothermique en utilisant le modèle de flux d'énergie (3) et le modèle d'accumulateur géothermique (2),
**caractérisé en ce que** le calcul des flux d'énergie dynamiques dans l'accumulateur géothermique à partir des courbes de température mesurées est effectué par une procédure par étapes, la variation instantanée de la température mesurée est déterminée dans un certain intervalle de temps, et celle-ci est corrigée par l'effet sur la température de toutes les variations du flux d'énergie dans les intervalles de temps précédents, de sorte qu'à la fin de l'intervalle de temps en cours, il ne reste qu'une seule variation de température qui n'est qu'un seul effet de la variation du flux d'énergie au début de l'intervalle de temps en cours, de sorte que la variation du flux d'énergie de l'intervalle de temps en cours est calculée et reportée dans l'intervalle de temps suivant, ce qui donne une série chronologique des flux d'énergies dans l'accumulateur géothermique qui est basée sur les courbes de température mesurées, des modèles récurrents, à savoir des cycles annuels, hebdomadaires et quotidiens des flux d'énergie dans l'accumulateur géothermique, sont pris en compte pour créer et paramétrer le modèle de flux d'énergie (3), et les flux d'énergie à attendre dans le futur sont simulés avec le modèle de flux d'énergie (3) et des variables d'entrée et des valeurs de paramètres à attendre dans le futur pour la gestion opérationnelle et l'utilisation de l'installation, avec la température de l'air extérieur et d'autres données sur le microclimat et/ou les conditions météorologiques ainsi qu'avec une éventuelle sollicitation de l'accumulateur géothermique par des installations voisines.

2. Procédé selon la revendication 1, **caractérisé en ce que** lors de la correction de la variation instantanée de la température mesurée, la variation de température est corrigée par le transfert de chaleur entre la paroi du trou de forage et la saumure circulant dans le système de circulation lorsque les températures sont mesurées dans la saumure en circulation.

3. Procédé selon l'une des revendications précédentes, **caractérisé en ce que** les courbes de température à venir calculées (31, 5) dans l'accumulateur géothermique sont évaluées par périodes de temps durant lesquelles la température simulée de l'accumulateur géothermique passe en dessous d'une valeur limite inférieure ou au-dessus d'une valeur limite supérieure.

4. Procédé selon la revendication 3, **caractérisé en ce que** la valeur limite inférieure de la température de l'accumulateur géothermique est comprise entre 0,0 °C et 4,0 °C, en particulier vaut 1,5 °C.

5. Procédé selon la revendication 3 ou 4, **caractérisé en ce que** la valeur limite supérieure pour le refroidissement direct est comprise entre 11,0 °C et 16,0 °C, en particulier vaut 14 °C.

6. Procédé selon la revendication 3, 4 ou 5, **caractérisé en ce qu'**en cas d'augmentation de la période de temps durant laquelle la valeur limite supérieure est dépassée, un signal d'alarme est émis et un refroidissement plus important de l'accumulateur géothermique est tenté dans des situations d'exploitation à venir.

7. Procédé selon la revendication 3, 4 ou 5, **caractérisé en ce qu'**en cas d'augmentation de la période de temps durant laquelle la valeur limite inférieure n'est pas atteinte, un signal d'alarme est émis et un réchauffement plus important de l'accumulateur géothermique est tenté dans des situations d'exploitation à venir.
